# EUROPEAN PATENT APPLICATION

(11) **EP 3 832 410 A1**
(43) Date of publication of application: **09.06.2021**
(21) Application number: 19840971.6
(22) Date of filing: 02.07.2019
(51) Int. Cl.: G05B 19/05

(54) **INFORMATION PROCESSING DEVICE AND DISPLAY PROGRAM**

(30) Priority: 27.07.2018 JP 2018141679
(71) Applicant: OMRON Corporation, Shiokoji-dori, Shimogyo-ku, Kyoto-shi Kyoto 600-8530 (JP)
(72) Inventor: SUGIYAMA, Asuka, Kyoto 619-0283 (JP); OHNUKI, Katsushige, Kyoto 619-0283 (JP); TAMASHIMA, Daisuke, Kyoto 619-0283 (JP); ICHIMURA, Akane, Kyoto 619-0283 (JP)
(74) Representative: Becker, Eberhard
(86) International application number: PCT/JP2019/026265
(87) International publication number: WO 2020/021993

(57) **Abstract**

An objective of the present invention is to provide an environment which provides effective support for control program development. When information relating to instructions indicated by objects which are included in a circuit diagram is presented by additionally displaying details objects, the states of the objects which are included in the circuit diagram are retained as is.

## Description

### BACKGROUND

### Technical Field

The present disclosure relates to an information processing device that displays a control program executed in a control device controlling a controlled object, and a display program that realizing the information processing device.

### Description of Related Art

At various manufacturing sites, control devices such as PLCs (Programmable Logical Controllers) have been introduced. Such a control device is a kind of computer, and a control program included in a user program designed according to a manufacturing device, a manufacturing facility, or the like is executed. Such a control program is created in a development environment prepared separately from the control device.

A user displays a control program in various situations such as a phase of creating a control program, a phase of confirming the operation of the control program, and a phase of fixing a bug in the control program. Therefore, it is required to display a control program that may efficiently proceed with development.

For example, Japanese Patent Application Laid-Open No. 2004-280341 (Patent Document 1) discloses a device having a full display form that display all multiple input/output terminals, and a simple rectangular display form that does not display input/output terminals that are not connected to a ladder circuit, as a display form of a function block calling instruction.

### Related Art

### Patent Document

Japanese Patent Laid-open No. 2004-280341

### SUMMARY

### Problems to be Solved

However, in the device disclosed in patent document 1, although the display form of one instruction element such as a function block calling instruction has been considered, the display form of other instruction elements when displaying one instruction element in detail has not been considered.

One object of the present disclosure is to provide an environment capable of effectively supporting the development of a sequence program.

### Means for Solving the Problems

According to an embodiment of the present disclosure, an information processing device that displays a control program executed in a control device controlling a controlled object is provided. The display program includes a program display means, displaying the control program in a circuit mode in which objects indicating instruction elements making up the control program are connected to each other; and an additional display means, additionally displaying, in response to a selection of a specific object among the objects displayed in the circuit mode, an additional object presenting information that is related to execution the instructions indicated by the specific object and that was not presented in the state displayed in the circuit mode, while retaining the state of the objects displayed in the circuit mode.

According to this disclosure, since the information presented by a part of the control program and the flow of the entire control program are effectively displayed, it is possible to provide an environment in which the development of the control program can be effectively supported.

In the above disclosure, the additional display means determines a position of the additional object based on the degree of density of the objects displayed in the circuit mode.

According to the disclosure, the additional object may be displayed at an appropriate position corresponding to the arrangement status of the objects included in the program displayed in the circuit mode.

In the above disclosure, an overlapping area between the additional object and the objects displayed in the circuit mode is relatively small, so as for the additional display means to determine the position of the additional object.

According to the disclosure, it is possible to prevent the objects indicating the instruction elements from being hidden by the newly additionally displayed additional object. As a result, more information can be provided.

In the above disclosure, the additional display means determines the position of the additional object based on a distance from the selected specific object.

According to the disclosure, objects indicating instructions common to each other can be displayed in association with each other.

In the above disclosure, the additional display means determines the position of the additional object based on the degree of overlap between the additional object and the objects displayed in the circuit mode and the distance from the selected specific object.

According to the disclosure, it is possible to prevent the other objects from being hidden by the details object while displaying the objects indicating the instructions common to each other in association with each other.

In the above disclosure, the additional display means obtains a display area and a display position of an object displayed in the circuit mode by modeling the object displayed in the circuit mode into a predetermined shape.

According to the disclosure, the display area and display position of the object can be easily obtained.

In the above disclosure, the additional display means searches for a position to display the additional object, centering on a specific selected object.

According to the disclosure, it is possible to quickly search for an appropriate position related to the selected specific object. As a result, the burden of processing for determining the display position can be reduced.

In the disclosure, when the additional object does not fit in the area between the objects disposed adjacent to the specific object selected among the objects displayed in the circuit mode and the selected specific object, the additional display means displays the additional object outside the program displayed in the circuit mode.

According to the disclosure, the additional object may be displayed without hiding the objects, and since there is a rule in the method of determining the display position of the additional object, the user can easily predict where the additional object will be displayed, and can easily find the displayed additional object.

According to another embodiment of the present disclosure, a display program for displaying a control program executed in a control device controlling a controlled object is provided. The display program causes the computer to execute a step of receiving the selection of a specific object among the objects included in the circuit mode in which the objects indicating the instruction elements making up the control program are connected to each other; and, a step, when the display program receives the selection of the specific object, of additionally displaying an additional object presenting information that is related to execution of instructions indicated by the specific object and that was not presented in the state displayed in the circuit mode, while retaining the state of the objects displayed in the circuit mode.

According to this disclosure, since the information presented by a part of the control program and the flow of the entire control program are effectively displayed, it is possible to provide an environment in which the development of the control program can be effectively supported.

### Effects

According to an example of the present disclosure, an objective of the present invention is capable of providing an environment which provides effective support for control program development.

### BRIEF DESCRIPTION OF THE DRAWINGS

FIG. 1 is a diagram showing a transition of a display of a control program according to the present embodiment.
FIG. 2 is a schematic diagram showing a configuration example of a control system to which a support device may be applied.
FIG. 3 is a schematic diagram showing a hardware configuration example of a support device.
FIG. 4 is a diagram showing an example of a user interface screen.
FIG. 5 is a diagram showing an example of an object.
FIG. 6 is a diagram showing an example of a program display area after an additional display.
FIG. 7 is a diagram showing display examples of details objects.
FIG. 8a is a diagram showing an example of displaying a details object 440 in an empty area, and FIG. 8b is a diagram showing an example of displaying the details object 440 at a position close to the selected object 450.
FIG. 9 is a flowchart of a display processing of a details object.
FIG. 10 is a flowchart of a search processing.
FIG. 11 is a diagram showing a display example when the right side of a right bus is used as a display area.
FIG. 12 is a conceptual diagram of a search method when a D₁ direction is a search target.
FIG. 13 is a diagram showing an example of a search result when the D₁ direction is a search target.
FIG. 14 is a conceptual diagram of a search method when a D₂ direction is a search target.
FIG. 15 is a diagram showing an example of a search result when the D₂ direction is a search target.
FIG. 16 is a diagram showing an example of a program display area before and after an additional display.
FIG. 17 is a schematic diagram showing a software configuration of a support device.
FIG. 18a is a diagram showing a details object 440a according to a first variation, and FIG. 18b is a diagram showing a details object 440b according to a second variation.
FIG. 19 is a flowchart of a search processing in a variation.

### DESCRIPTION OF THE EMBODIMENTS

Embodiments of the present invention will be described in detail with reference to the drawings. The same or corresponding parts in the drawings are designated by the same reference numerals and the description thereof will not be repeated.

### §1 Application example

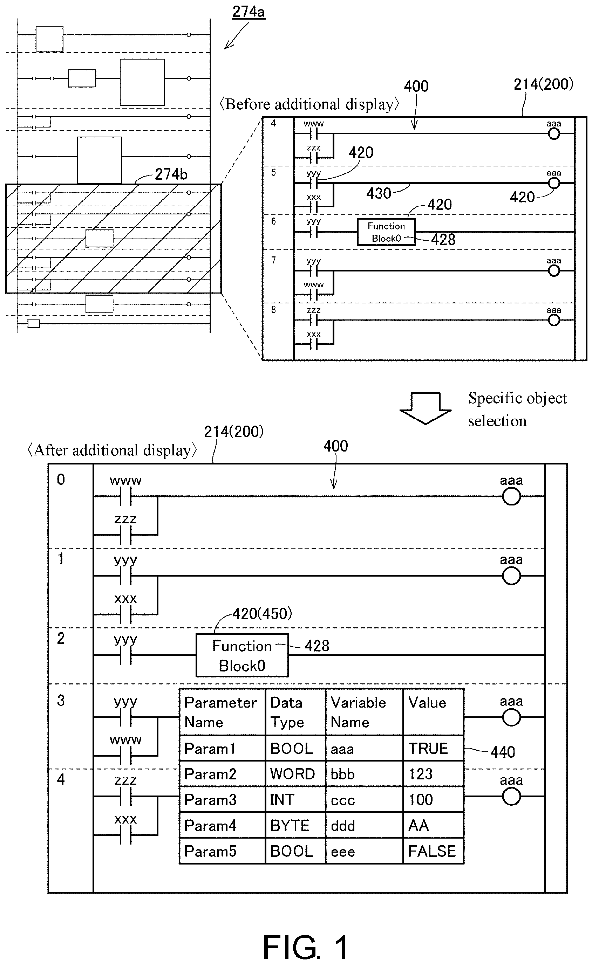

An example of a situation in which the present invention is applied will be described with reference to FIG. 1. FIG. 1 is a diagram showing a transition of a display of a control program according to an embodiment. The control program is a program executed by a control device controlling various devices used in the FA field.

In the present specification, the "control program" is concept, including a program for providing a basic function of a control device for controlling various devices used in the FA field, and a program arbitrarily designed according to a controlled object (as referred to as a "user program"). However, the control program may include only a program arbitrarily designed according to the controlled object.

In the international standard IEC61131-3, five types of programming language for PLC applications, ladder diagram (LD), function block diagram (FBD), sequential function chart (SFC), instruction list (IL) and structured text (ST) are specified. The control program according to the present invention targets a program written in a programming language that may be displayed in a circuit mode in which the multiple instruction elements are connected to each other, and specifically, targets a program written in ID, FBD, or SFC. Hereinafter, an example written in LD will be described as a typical example. When a method of writing the entire program in multiple languages is adopted, a program written in ST or IL may be included in the control program.

A user confirms a control program in various situations such as a phase of creating a control program, a phase of confirming the operation of the control program, and a phase of fixing a bug in the control program. An information processing device that displays the control program is provided according to the situation at the time of confirmation. For example, a support device 200 that supports the development of the program, a programmable display that monitors various devices controlled by the control device, and the like are provided. Hereinafter, as a typical example, a case in which the configuration of the program is displayed in the support device 200 will be described.

On a display 214 provided by the support device 200, the support device 200 displays a control program in a circuit mode in which multiple instruction elements included in the control program are connected to each other. The display destination is, for example, the display 214 provided in the support device 200, but may be a display unit provided in a device different from the support device 200.

When the support device 200 cannot display the entire control program, the support device 200 displays the instructions of the specified part of the control program in a circuit mode. For example, in FIG. 1, a part 274b of an overall control program 274a is assumed to be displayed on the display 214 as a circuit diagram 400.

Each instruction element is indicated by an object 420, respectively. That is, the circuit diagram 400 is made up of multiple objects 420 and a line 430 connecting the objects 420 to each other. In FIG. 1, some reference numerals are omitted in order to simplify the illustration.

The user may select a specific object 420 among the displayed objects 420 by operating an input unit such as a mouse or a keyboard. The support device 200 additionally displays a details object 440 presenting information that is related to execution of instructions indicated by the selected object 420 (also referred to as "selected object 450") selected among the displayed objects 420. In FIG. 1, the size of the display before and after the additional display is changed for convenience.

The information presented by the details object 440 includes information that was not presented in a state displayed in the circuit mode before the details object 440 is additionally displayed (the state before the additional display). For example, in FIG. 1, in the state before the additional display, a name 428 of the instructions indicated by the selected object 450 is shown. On the other hand, the details object 440 presents the details of the instructions indicated by the selected object 450. Specifically, in FIG. 1, for each parameter ("parameter name" column in the table) used in the instructions indicated by the selected object 450, the type of the parameter ("data type" column in the table), the variable name given to the parameter ("variable name" column in the table), and the value entered for the parameter ("value" column in the table) are presented.

When the support object 200 additionally displays the details object 440, the support object 200 displays the details object 440 while retaining the circuit diagram 400 that was displayed before the additional display. Retaining the circuit diagram 400 means that all objects 420 that were displayed before the additional display are kept being displayed without changing the relative positional relationship of each object 420 included in the circuit diagram 400 that was displayed before the additional display. In other words, the support device 200 additionally displays the details object 440 while retaining the state of the objects 420 displayed in the circuit mode.

Thus, when the details object 440 is additionally displayed, by retaining the state of the objects 420 displayed in the circuit mode, information related to the instructions indicated by the selected object 420 can be additionally presented without losing information that is before the details object 440 is additionally displayed. That is, the support device 200 capable of effectively confirming the details of the control program and the flow of the control program is provided. As a result, an objective of the present invention is capable of providing an environment which provides effective support for control program development.

### §2 Specific example

Hereinafter, as a specific example of the present invention, a more detailed configuration and processing of the support device 200 according to the present embodiment will be described.

### <A. Control system to which a support device can be applied>

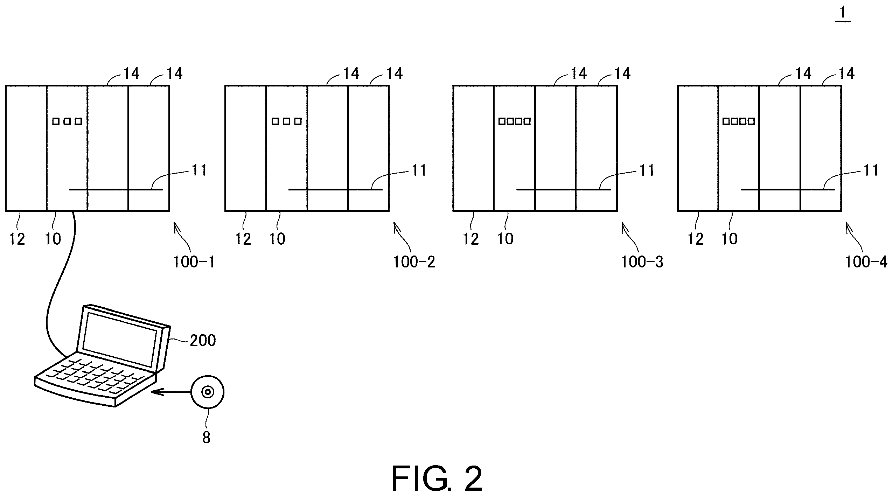

FIG. 2 is a schematic diagram showing an example of a control system configuration to which the support device 200 can be applied. Referring to FIG. 2, a control system 1 includes multiple PLCs 100-1, 100-2, 100-3, 100-4.... (hereinafter also collectively referred to as "PLC 100"). Each of the PLC 100 is an example of a control device controlling a controlled object that is a field device such as a relay or a sensor. The support device 200 may be connected to the PLC 100 and provides an environment for supporting the development of the control program of the PLC 100. The control system 1 may have a configuration including one PLC 100. In the following, for the sake of simplicity, a development environment for one PLC 100 will be described.

Typically, the PLC 100 includes a CPU unit 10 that is a main body that executes various programs including a control program, a power supply unit 12 that supplies power to the CPU unit 10 and the like, and an I/O (input/output) unit 14 that exchanges signals from the field. The I/O unit 14 is connected to the CPU unit 10 via a system bus 11.

The development support environment provided by support device 200 may have an editor of a control program, a debugger, a simulator, a monitor function that outs the output information to a monitor such as a display or the like. The support device 200 also has a function of acquiring the state value of the PLC 100 in operation and outputting the state value to a monitor such as a display.

By installing the support program, which is an application program that is stored in an optical recording medium 8, in the support device 200, various functions for the development support environment as described above are realized. Instead of the optical recording medium 8, the support program may be downloaded from an external server device or the like via the network. As an example, the support device 200 is connected to the CPU unit 10 of the PLC 100 via a connection cable. The support device 200 is typically implemented as a personal computer.

### <B. Example of hardware configuration of support device 200>

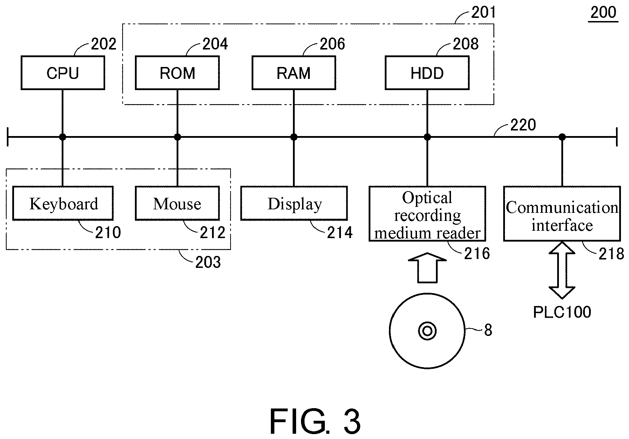

FIG. 3 is a schematic diagram showing an example of a hardware configuration of the support device 200. Referring to FIG. 3, the support device 200 is typically made up of a general purpose computer. From the viewpoint of maintainability at the manufacturing site where the PLC 100 is disposed, a notebook-type personal computer having excellent portability is preferable.

The support device 200 includes a storage unit 201 and a CPU 202 that executes various programs including an operating system (OS). The storage unit 201 includes a read-only memory (ROM) 204 that stores BIOS or various data, a memory RAM 206 that provides a work area for storing data necessary for executing a program on the CPU 202, , and a hard disk (HDD) 208 that non-volatilely stores a program or the like executed in the CPU 202.

The support device 200 further includes an operation unit 203 including a keyboard 210 and a mouse 212 operated by the user to input instructions to the support device 200, and a display 214 that presents information to the user. The support device 200 includes a communication interface 218 for communicating with the PLC 100 (CPU unit 10) or the like. The communication interface 218 may include a USB communication module for communicating with a USB interface (not shown) provided in the PLC 100.

The support device 200 includes an optional recording medium reader 216 for reading from the optical recording medium 8 a support program stored in the optical recording medium 8 for providing a development support environment.

FIG. 3 shows a configuration example in which a processor such as the CPU 202 provides necessary functions by executing a program, and some or all of the provided functions may be implemented using a dedicated hardware circuit (for example, an ASIC or FPGA). In this case, virtualization technology may be used to execute multiple OSs having different purposes in parallel, and to execute necessary applications on each OS.

### <C. User interface screen>

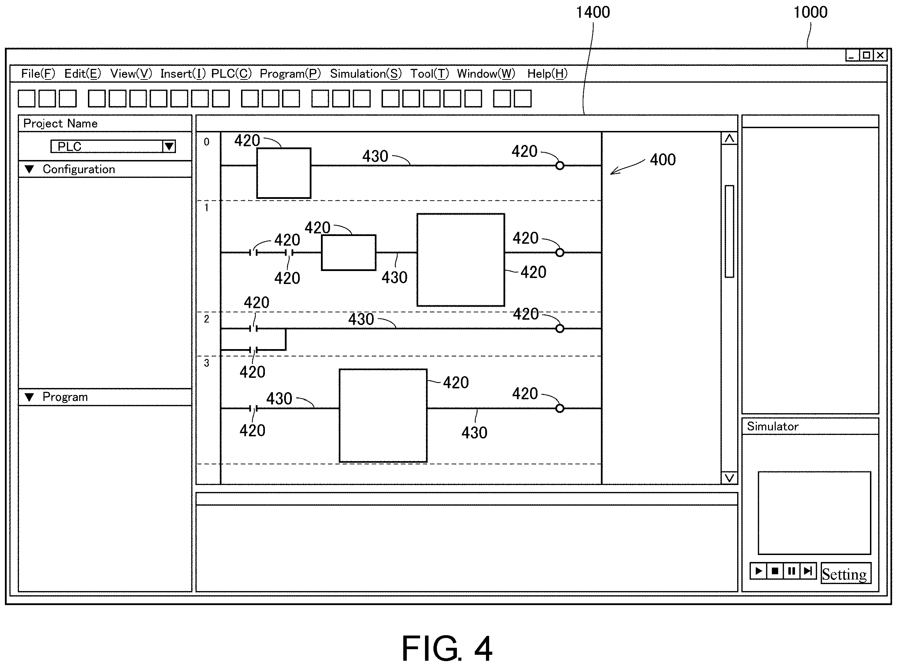

FIG. 4 is a diagram showing an example of a user interface screen 1000 where a user program is displayed. The user interface screen 1000 is presented to the user via the display 214.

The user interface screen 1000 includes a program display area 1400. As shown in FIG. 4, the program display area 1400 is set to a predetermined display range within the user interface screen 1000, and may be a configuration that the range of the program display area 1400 may be arbitrarily changed by a user operation.

In the program display area 1400, instructions of a specified part of the user program is displayed. The user program is displayed in a circuit mode in which the objects 420 indicating instruction elements are connected to each other by the line 430. That is, the circuit diagram 400 is displayed in the program display area 1400.

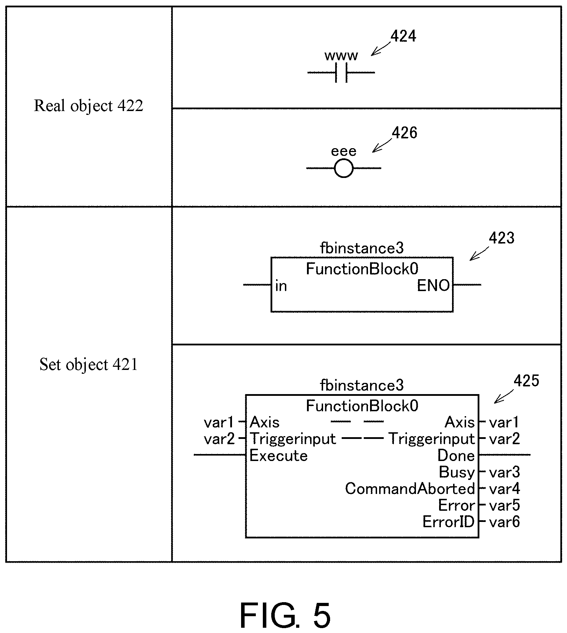

FIG. 5 is a diagram showing an example of the object 420. The object 420 includes a real object 422 presenting some a part itself such as a contact 424 and a coil 426, and a set object 421 presenting a predetermined processing as a set.

The set object 421 may be displayed in two different display formats. Specifically, the set object 421 is displayed in one of a simplified format and a detailed format having a larger amount of information than the simplified format. As shown in FIG. 5, a set object 425 in detailed format has a larger amount of information included in one object than a set object 423 in simplified format. The display format may be predetermined or may be selectable by the user. Further, the display format may be switched when the display is performed in the circuit mode. In the following, when it is no particular need to distinguish between the simplified format and the detailed format, the set object is referred to as "set object 421". When the set object in simplified format is described, it is referred to as "set object 423"; when the set object in detailed format is described, it is referred to as "set object 425".

The set of processings indicated by the set object 421 may include processings defined by a function (FUN) or function block (FB), and processings written in another language such as ST language.

### <D. Additional display>

For the set object 423 displayed in simplified format, the support device 200 may additionally display on the display 214 information that is not presented in the simplified form among the processing contents indicated by the set object 423.

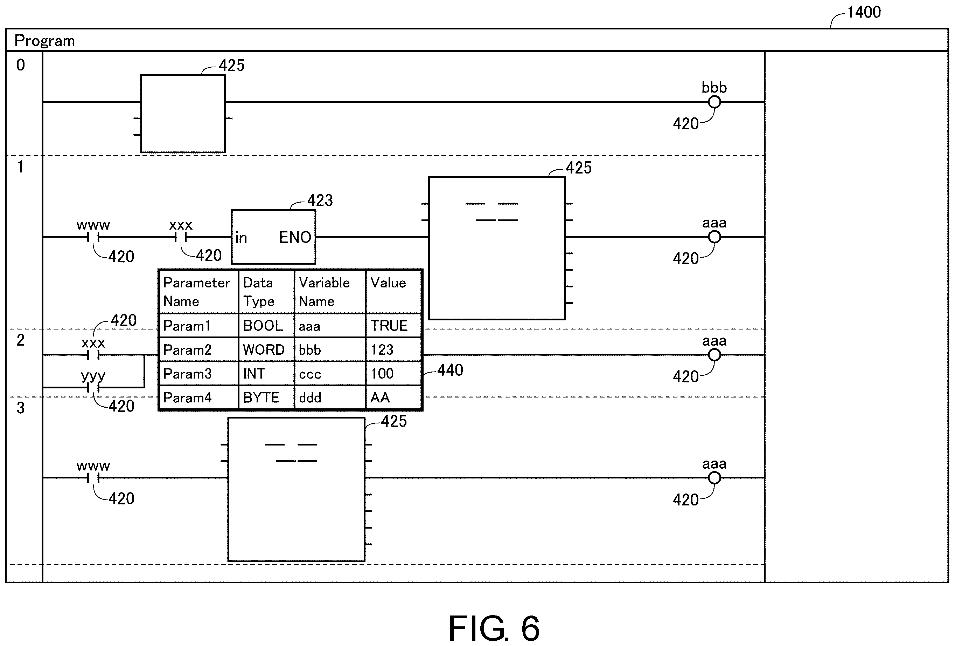

FIG. 6 is a diagram showing an example of the program display area 1400 after an additional display. It should be noted that in FIG. 6, to simplify the drawing, in the set object 425 in the detailed format, no detailed information is presented. When the set object 423 displayed in the program display area 1400 is selected based on the operation from the operation unit 203, in response to the selection, the details object 440 is displayed in the program display area 1400 to additionally provide information not presented in the simplified format. Here, that the details object 440 is displayed in the program display area 1400 is also referred to as additional display.

As an operation for performing the additional display, a method of operating the mouse 212 to select one set object 423 can be mentioned, for example. Further, the display switching function of the details object 440 may be assigned to a specific operation of the keyboard 210 such as the function key of the keyboard 210.

Further, it is also possible to hide the details object 440 that is once displayed. The timing for hiding includes: when an operation for closing the details object 440 is received, and when an operation for adding the real object 422 or the set object 421 at the position where the details object 440 is provided is received. Operations for closing the details object 440 include providing a button for closing in the details object 440, operating the button, displaying a menu screen by right-clicking a mouse or the like, and selecting closing from the displayed menu screen. Further, when the operation of adding the real object 422 or the set object 421 to the position where the details object 440 is provided is received, the display position of the details object 440 may be determined and arranged again.

Before and after the additional display, the positional relationship of the objects 420 displayed in the circuit mode do not change. In other words, the support device 200 performs an additional display while retaining the state of the objects 420 displayed in the circuit mode. At this time, the details object 440 is overlapped on the image which, before being additionally displayed, is displayed in the program display area 1400. That is, the details object 440 is overlapped on the circuit diagram 400 made up of the objects 420 displayed in the circuit mode and the line 430. Overlapping means that the details object 440 is displayed more on a layer located on the front side (the side where the user is located) than the layer where the circuit diagram 400 is displayed. In this way, by making the layer that displays the details object 440 different from the layer that displays the circuit diagram 400, changes can be made to the circuit diagram 400 while retaining the state of the details object 440 displayed, and the operability for changing the circuit diagram 400 can be made the same before and after the details object 440 is displayed. Further, even when the execution result of the control program is reflected in the circuit diagram 400 so as to check the operation of the control program, the details object 440 can be displayed without affecting the reflection of the execution result.

The details object 440 may present the same information as the information when the set object 421 is presented in the detailed format, or may present more information than the information when the set object 421 is presented in the detailed format. Further, less information may be presented than the information when the set object 421 is presented in the detailed format.

When the details object 440 presents more information than the information when the set object 421 is presented in detailed format, the details object 440 may also be additionally displayed in response to the selection of the set object 425. That is, in the present embodiment, when the set object 423 is selected and the predetermined operation is received, the details object 440 is displayed, but the details object 440 may also be displayed even when the set object 425 is selected and the predetermined operation is received. Moreover, the following will describe a case where the details object 440 is displayed when the set object 423 is selected and the predetermined operation is received.

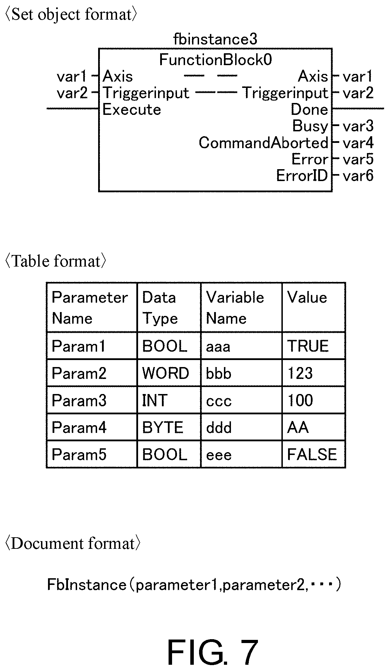

FIG. 7 is a diagram showing an example of the details object 440. The details object 440 may be displayed in various formats such as the same format as the detailed format (set object format), a table format, and a document format, or the like. As the document format, various formats such as a method of displaying characters in bullet points and a method of displaying in lines may be used.

### <E. Display position of details object 440>

The support device 200 determines the display position of the details object 440 in the program display area 1400 based on the positions of the objects 420 displayed in the circuit mode and the sizes of the objects 420. More specifically, the display position of the details object 440 is determined based on the viewpoint of at least one of the positional relationship between the selected set object 423 (hereinafter, also referred to as "selected object 450") and the details object 440 and the degree of overlap between the objects 420 displayed in the circuit mode and the details object 440.

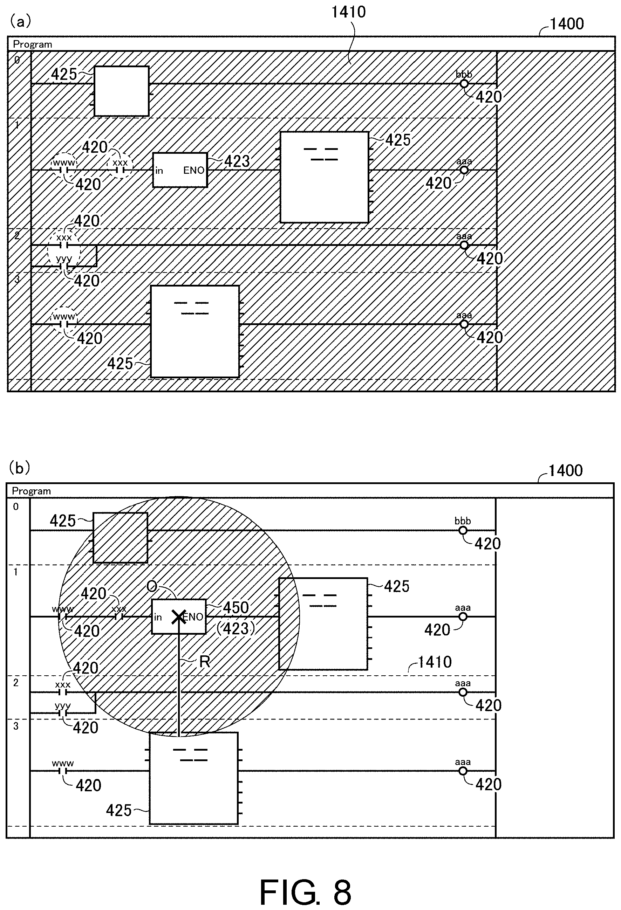

FIG. 8a is a diagram showing an example of displaying a details object 440 in an empty area, and FIG. 8b is a diagram showing an example of displaying the details object 440 at a position close to the selected object 450.

As shown in FIG. 8a, the support device 200 may identify an empty area 1410 (the area shown by the right diagonal line in FIG. 8a) in the program display area 1400 where the objects 420 are not displayed, and place the details object 440 in the empty area 1410 so as to determine the display position of the details object 440. The empty area 1410 is an area where the objects 420 are not displayed. Therefore, placing the details object 440 in the empty area 1410 means, in other words, the position of the details object 440 is determined according to the degree of density of the objects 420.

More specifically, the details object 440 is disposed such that the area where the details object 440 and the objects 420 overlap is relatively small, so as to determine the display position.

As shown in FIG. 8b, the support device 200 may determine the display position of the details object 440 based on a distance from a center O, centered on the display position of the selected object 450. For example, in the example shown in FIG. 8b, a position within a distance of R from the center O is defined as the display range of the details object 440.

In the present embodiment, for each object 420 displayed in the circuit mode, the empty area 1410 is specified by specifying the display position (x, y) and the display area (S) of the object 420, and the position to display the details 440 is determined from the empty area 1410 centering and around the selected object 450.

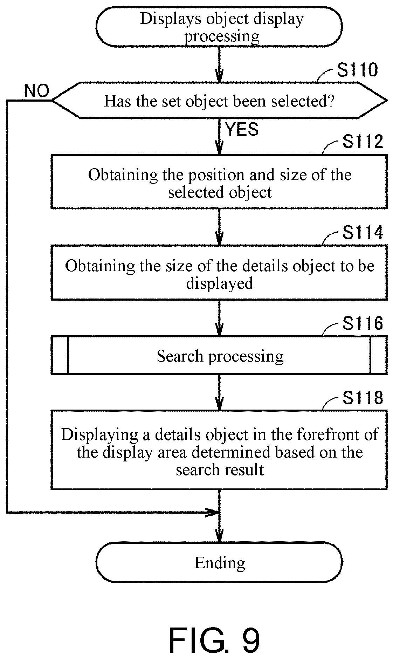

FIG. 9 is a flowchart of a details object display processing. The details object display processing is a processing executed by the CPU 202 of the support device 200. The details object display processing is realized by the CPU 202 executing an instruction code indicated by a GUI module 258 described later.

In step S110, the CPU 202 determines whether or not the set object 423 is selected. If it is determined that it has been selected (NO in step S110), the CPU 202 ends the processing. If it is determined that it has been selected (YES in step S110), the CPU 202 ends the processing.

In step S112, the CPU 202 obtains a position (Xa, Ya) and a size (Sa) of the selected object 450 in the program display area 1400. At this time, the CPU 202 may obtain the position and the size by modeling the shape of the selected object 450 into a predetermined shape. In the present embodiment, it is assumed that the CPU 202 models it into a quadrangle. In this way, the position and size can be easily calculated by obtaining the position and size of the set object 423 by modeling the shape into a predetermined shape.

In step S114, the CPU 202 obtains a size (Sb) of the details object 440 to be displayed. The size (Sb) of the details object 440 is obtained based on the display format of the details object 440 and the amount of information presented in the details object 440.

In step S116, the CPU 202 performs a search processing. The search processing is a processing for searching the position where the details object 440 is displayed.

In step S118, the CPU 202 displays a details object 440 in the forefront of the display area determined based on the search result, and ends the processing.

### <F. Search processing>

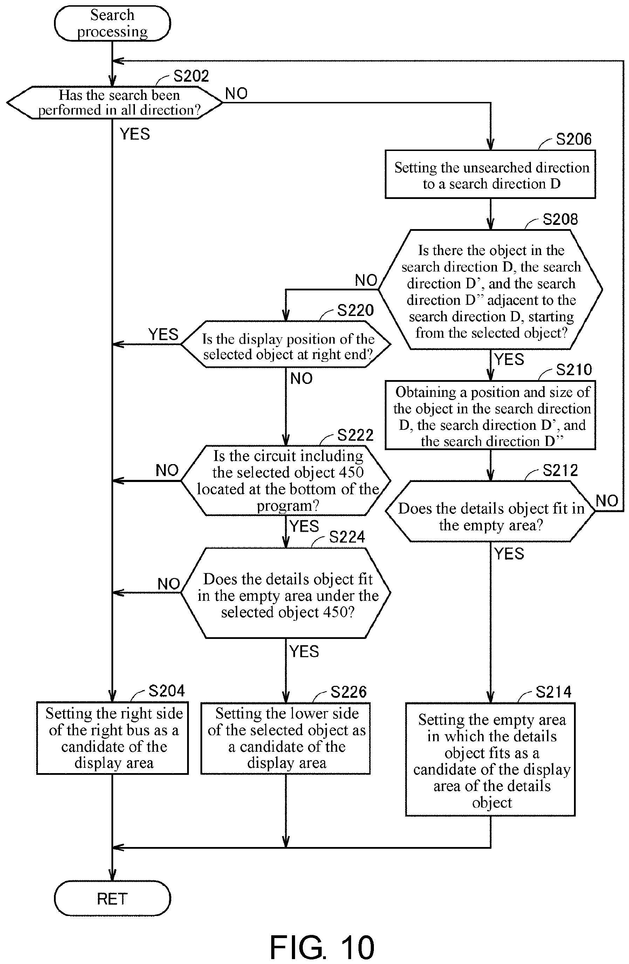

A processing for searching for a position where the details object 440 is displayed will be described with reference to FIG. 10 to FIG. 16. FIG. 10 is a flowchart of a search processing.

In step S202, the CPU 202 determines whether or not the search has been performed in all directions. All directions refers to the direction seen from the center, centering on the selected object 450. Specifically, in the present embodiment, the four directions of up, down, left, and right, centering on the selected object 450, are taken as all directions. In addition, all directions are not limited to four directions, and may be five or more directions or three or less directions.

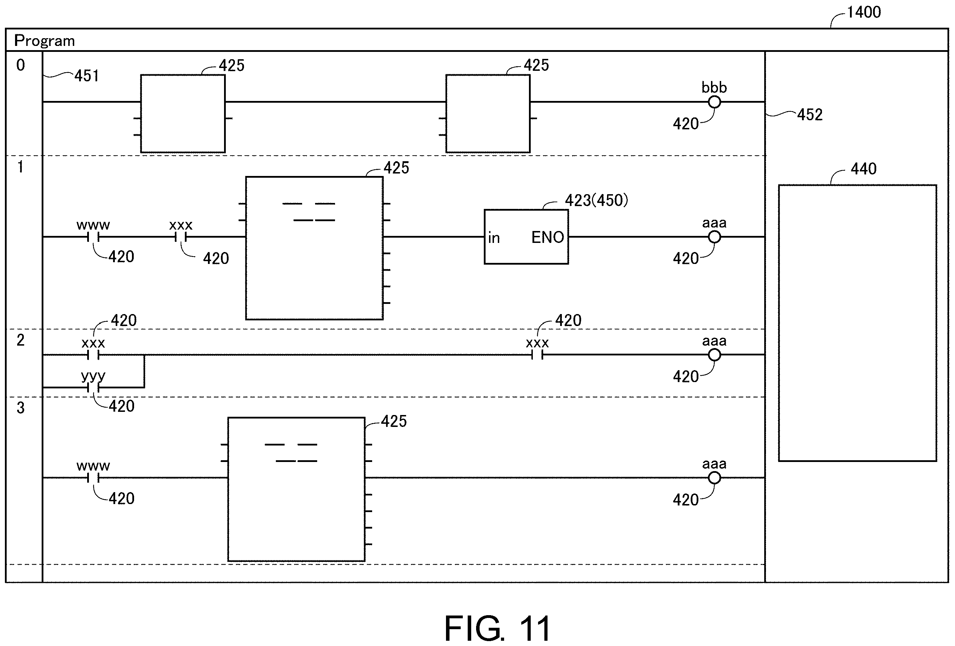

If it is determined that the search has been performed in all directions (YES in step S202), the CPU 202 determines the right side of the right bus as the display area in step S204, and returns to the details object display processing. More details will be given with reference to FIG. 11. FIG. 11 is a diagram showing a display example when the right side of a right bus is used as a display area. Also, in FIG. 11, detailed information is not shown, in order to simplify the drawing.

The objects 420 are displayed in the area sandwiched between a left bus 451 and a right bus 452. Of the left bus 451 and the right bus 452, the details object 440 is displayed outside the right bus 452 where nothing is displayed on the outside.

If it is determined that there is a direction that has not been searched (NO in step S202), the CPU 202 proceeds to step S206.

In step S206, the CPU 202 sets the unsearched direction to a search direction D. When there are multiple unsearched directions, the CPU 202 sets the search direction D according to a predetermined priority. The priority may be set by the user or by the program provider. In the present embodiment, the search is performed in the order of right direction (Di), downward direction (D₂), left direction, and upward direction.

In step S208, the CPU 202 determines whether or not there is the object 420 in the search direction D, the search direction D', and the search direction D" adjacent to the search direction D, starting from the selected object 450. That is, the CPU 202 searches for a position to display the detailed object 440, centering on the selected object 450.

If it is determined that there is an object 420 (YES in step S208), the CPU 202 proceeds to step S210.

In step S210, the CPU 202 obtains a position (Xc, Yc) and a size (Sc) of the object 420 in the search direction D, the search direction D', and the search directions D".

In step S212, the CPU 202 determines whether or not the details object 440 fits in the empty area 1410. The empty area 1410 is a region between the selected object 450 at the position (Xa, Ya) and the object 420 at the position (Xc, Yc).

If it is determined that it fits (YES in step S212), the CPU 202 determines in the step S214 the empty area 1410 in which the details object 440 fits as the display area of the details object 440, and returns to the details object display processing.

If it is determined that it does not fit (NO in step S212), the CPU 202 returns to step S202 and repeats steps S202 to step S212 until the search in all directions is completed or until the empty area 1410 in which the details object 440 fits is found.

The fact that the details object 440 fits in the empty area 1410 means that the details object 440 and the objects 420 do not overlap. That is, by repeating steps S202 to step S212 until the empty area 1410 in which the details object 440 fits is found, it can be said that the details object 440 is disposed such that the area where the details object 440 and the objects 420 overlap is relatively small, so as to determine the display position.

Further, when the details object 440 does not fit in the empty area, the CPU 202 changes the search direction and determines whether or not the details object 440 fits in the empty object provided in the search direction again. Then, if an empty area in which the details object 440 fits is not found even after searching in all directions, in step S204, the right side of the right bus 452, that is the outside of the circuit diagram showing the user program, is determined as the display area of the detailed object 440. That is, the CPU 202 displays the detailed object 440 outside the circuit diagram showing the user program if the details object 440 cannot fit in the area between the objects 420 and the selected object 450 when the surroundings of the selected object 450 is surrounded by the objects 420.

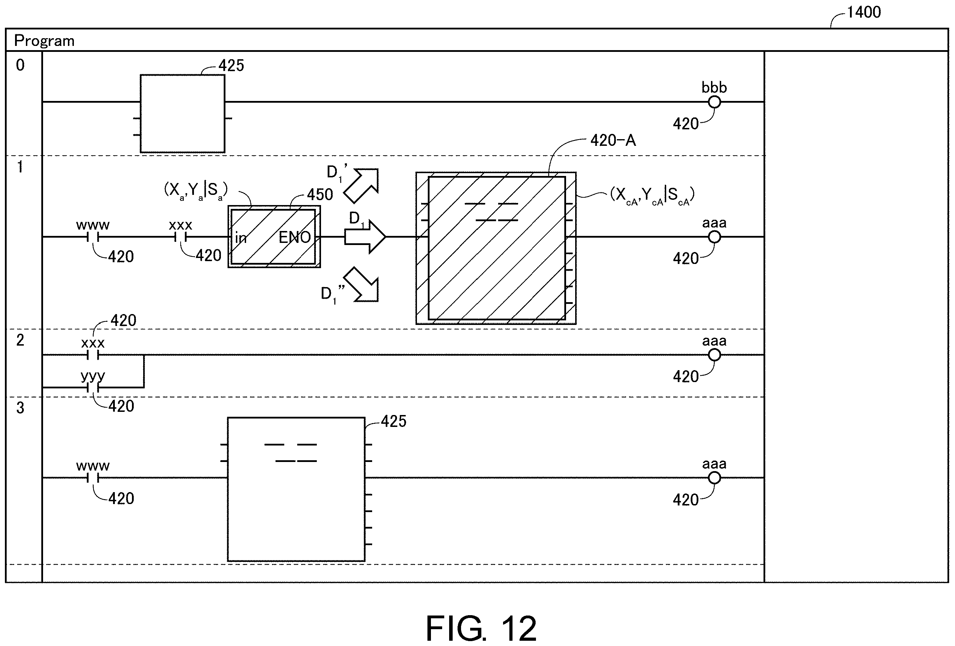

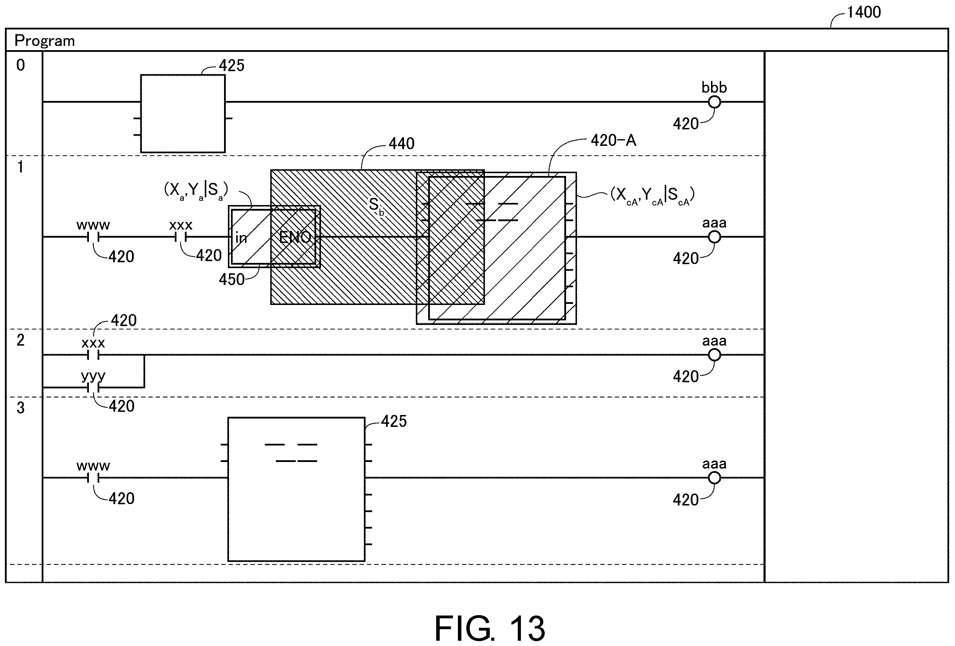

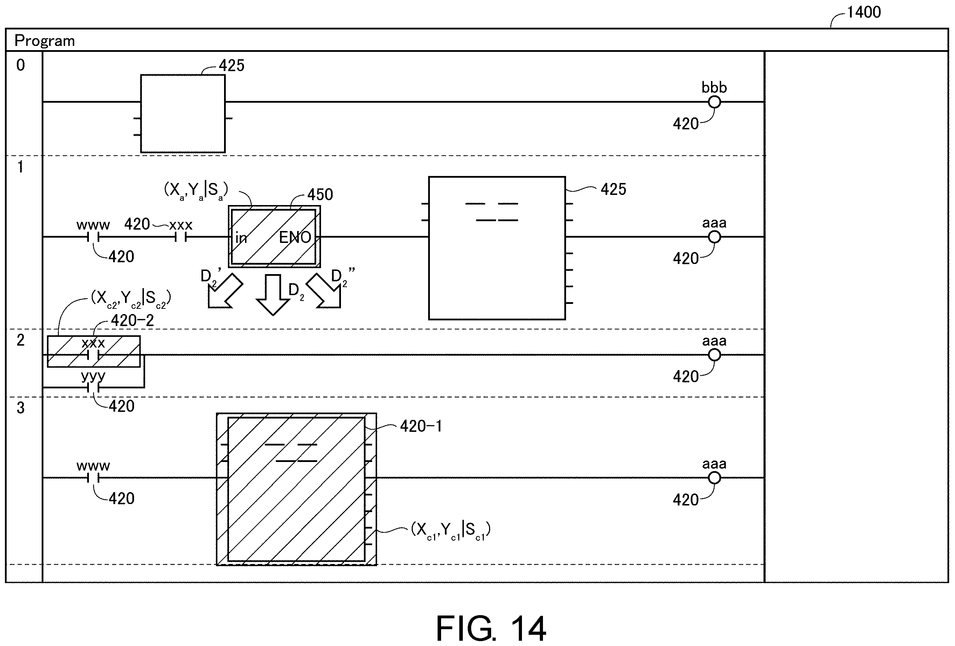

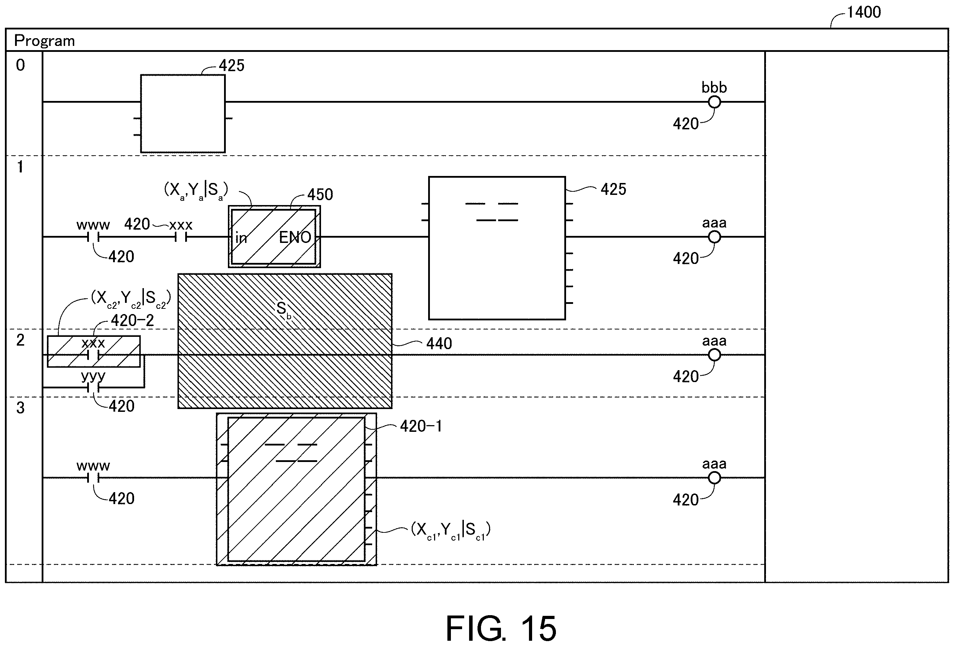

Referring to FIG. 12 to FIG. 15, the outline of determining the display position of the details object 440 by repeating steps S202 to S212 will be described. FIG. 12 is a conceptual diagram of a search method when a D₁ direction is a search target. FIG. 13 is a diagram showing an example of a search result when the D₁ direction is a search target. FIG. 14 is a conceptual diagram of a search method when a D₂ direction is a search target. FIG. 15 is a diagram showing an example of a search result when a D₂ direction is a search target.

As shown in FIG. 12, one object 420 is located in a D₁ direction, a D1' direction, and a D1" direction. The CPU 202 obtains a position (X_{cA}, Y_{cA}) and a size (S_{cA}) of an object 420-A located in the D₁ direction.

At this time, the CPU 202 may obtain the position and the size of the object 420 by modeling the shape of the object 420 into a predetermined shape. In FIG. 12, it is assumed that the CPU 202 models it into a quadrangle. In this way, the position and size may be easily calculated by modeling the shape into a predetermined shape and obtaining the position and size of the object 420.

As shown in FIG. 13, in the example shown in FIG. 12, the details object 440 of size (Sb) does not fit between the selected object 450 and the object 420-A. In such a case, the CPU 202 sets the search direction D again, and searches for whether or not the details object 440 fits in the set search direction D. In the present embodiment, the direction D₂ is set next to the direction D₁.

As shown in FIG. 14, two objects 420 are located in a D₂ direction, a D2' direction, and a D2" direction. The CPU 202 obtains the position and size of each of the two objects. Specifically, the CPU 202 obtains a position (X_{c1}, Y_{c1}) and a size (S_{c1}) of an object 420-1 and a position (X_{c2}, Y_{c2}) and a size (S_{c2}) of an object 420-2.

At this time, the CPU 202 may obtain the position and the size of the object 420 by modeling the shape of the object 420 into a predetermined shape. In FIG. 14, it is assumed that the CPU 202 models it into a quadrangle. In this way, the position and size may be easily calculated by modeling the shape into a predetermined shape and obtaining the position and size of the object 420.

As shown in FIG. 15, in the example shown in FIG. 14, the details object 440 of size S_{b} fits between the selected object 450 and the object 420-1. The CPU 202 determines the position between the selected object 450 and the object 420-1 as the display position of the details object 440, and returns to the details object display processing.

Returning to the flowchart of the search processing of FIG. 10, the processing if it is determined that there is no object 420 (NO in step S208) will be described. If it is determined that there is no object 420 (NO in step S208), the CPU 202 proceeds to step S220.

In step S220, the CPU 202 determines whether or not the display position of the selected object 450 is at right end.

If it is determined that the display position of the selected object 450 is the right end (YES in step S220), the CPU 202 determines the right side of the right bus in the step S204 as the display area, and returns to the details object display processing.

If it is determined that the display position of the selected object 450 is not the right end (NO in step S220), the CPU 202 proceeds to step S222.

In step S222, the CPU 202 determines whether or not the circuit including the selected object 450 is located at the bottom of the program.

If it is determined that it is not the bottom (NO in step S222), the CPU 202 determines the right side of the right bus as the display area in the step S204, and returns to the details object display processing.

If it is determined to be the bottom (YES in step S222), the CPU 202 proceeds to step S224.

In step S224, the CPU 202 determines whether or not the details object 440 fits in the empty area under the selected object 450. If it is determined that the diagram object 440 does not fit in the empty area under the selected object 450 (NO in step S224), the CPU 202 proceeds to step S204, and determines the right side of the right bus 452, that is the outside of the circuit diagram showing the user program, as the display area of the details object 440. On the other hand, if it is determined that the details object 440 fits in the empty area under the selected object 450 (YES in step S224), the CPU 202 proceeds to step S226.

In step S226, the CPU 202 determines the lower side of the selected object 450 as the display area, and returns to the details object display processing.

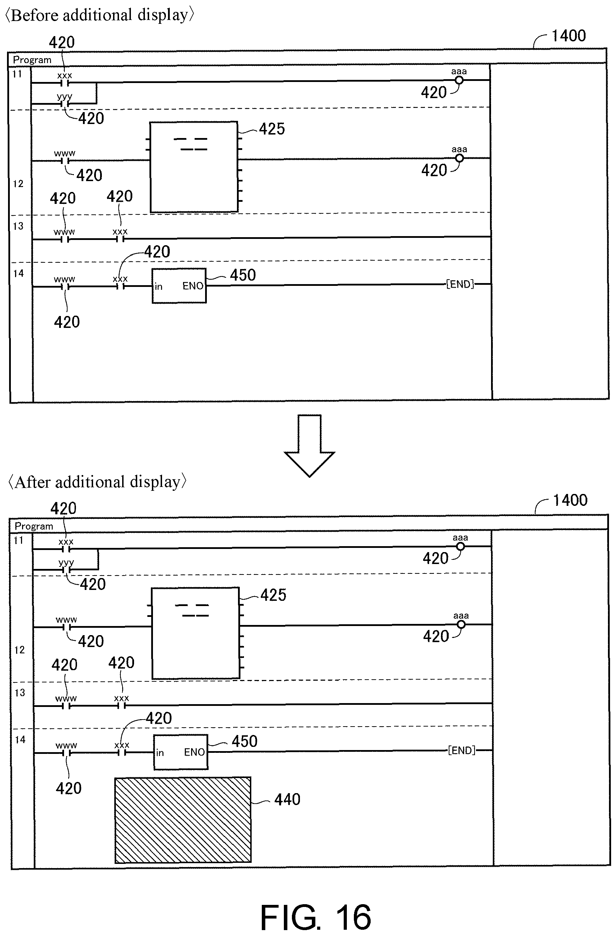

FIG. 16 is a diagram showing an example of the program display area 1400 before and after an additional display. In FIG. 16, it is assumed that the circuit including the selected object 450 is located at the bottom of the program.

If the circuit including the selected object 450 is located at the bottom of the program and there is an empty area under the selected object 450, the support object 200 will display the select object 440 under the selected object 450.

### <Software configuration of support device 200>

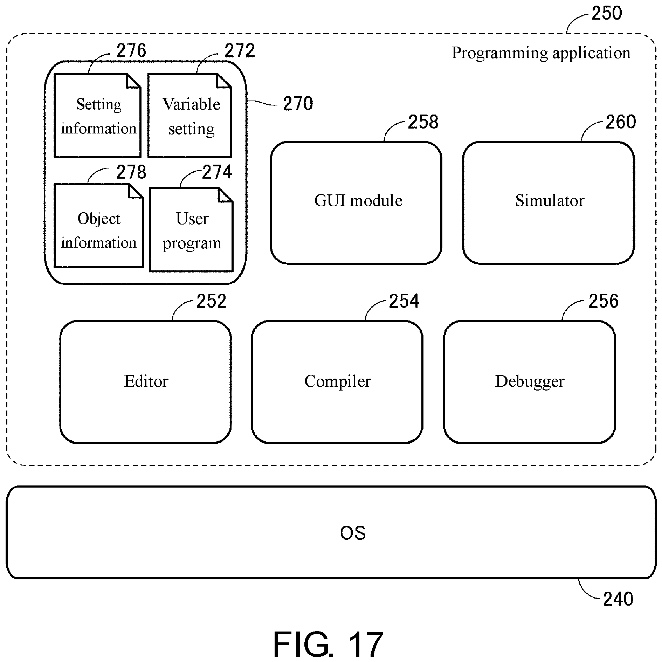

The software configuration included in the support device 200 will be described with reference to FIG. 17. FIG. 17 is a schematic diagram showing a software configuration of the support device 200. The instruction code included in the software shown in FIG. 17 is read at an appropriate timing, provided to the CPU 202 of the support device 200, and executed. Further, the software shown in FIG. 17 is included in the support program stored and provided in the optical recording medium 8.

Referring to FIG. 17, an OS 240 and a programming application 250 are installed in the support device 200. In the support device 200, the OS 240 is executed, and an environment in which the programming application 250 may be executed is provided. The support program for realizing the support device 200 according to the present embodiment includes at least the programming application 250.

The programming application 250 includes an editor 252, a compiler 254, a debugger 256, the GUI (Graphical User Interface) module 258, a simulator 260, and a data storage unit 270. Each module included in the programming application 250 is typically distributed in a state of being stored in the operational recording medium 8 as the support program and installed in the support device 200.

The editor 252 provides functions such as input and editing for creating an executable program (source program). More specifically, the editor 252 provides a function of saving and editing a created source program in addition to a function of a user operating the keyboard 210 or the mouse 212 to create a source program of a user program 274.

The compiler 254 provides a function of compiling the source program of the user program 274 to generate an executable program that may be executed by the CPU unit 10.

The debugger 256 provides a function of debugging an executable program (source program). As the contents of the debugging, operations such as partially executing a user-specified range in the source program and tracking changes in variable values over time during execution of the source program are included.

The GUI module 258 has a function of providing a user interface for the user to input various data, parameters, and the like. That is, the user interface screen 1000 described above is provided by the GUI module 258. The GUI module 258 provides a user interface screen 1000 based on the operations received by the operation unit 203, the user program 274, a variable setting 272 necessary for the execution of the program, setting information 276 related to the display format, and the object information 278 related to the object. The GUI module 258 provides the functions of the program display means and the additional display means of the present invention.

The simulator 260 builds in the support device 200 an environment that simulates execution of a program in the CPU unit 10 of the PLC 100.

The data storage unit 270 stores the user program 274, the variable setting 272, the setting information 276, and the object information 278.

### <Variation>

### (h1. Additional display)

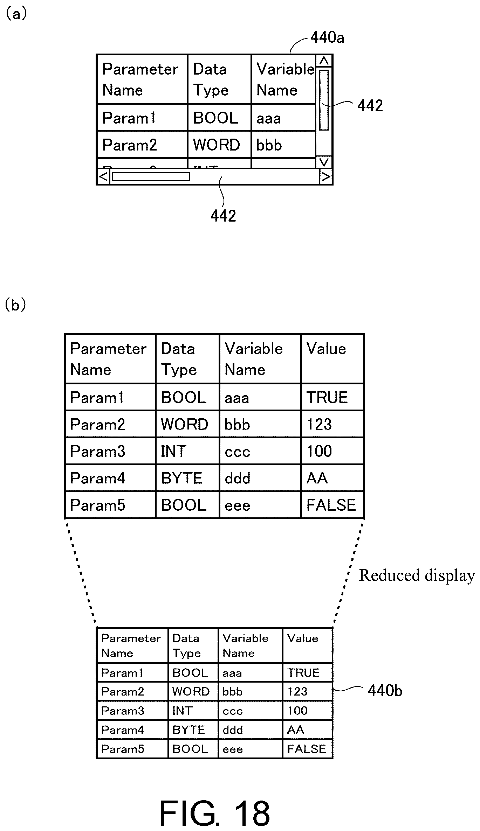

In the present embodiment, an example is shown in which the size (Sb) of the details object 440 is additionally displayed without being changed. The CPU 202 may determine the size of the details object 440 based on the range of the empty area 1410. FIG. 18 is a diagram showing a variation of an additional display. FIG. 18a is a diagram showing a details object 440a according to a first variation, and FIG. 18b is a diagram showing a details object 440b according to a second variation.

As shown in FIG. 18a, without reducing the image to be displayed as the details object 440, the CPU 202 may display only the image that fits in the display area of the determined size and the user can check the whole by operating a scroll bar 442 or the like. Further, as shown in FIG. 18b, the image displayed as the details object 440 may be reduced so that the image may fit in the determined size.

### (h2. Search processing)

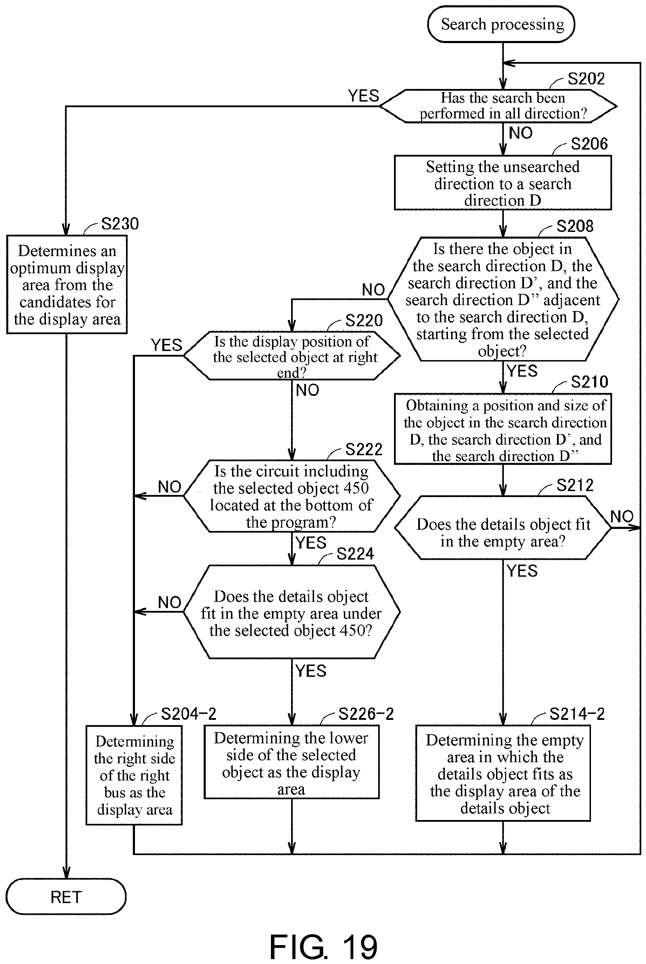

FIG. 19 is a flowchart of a search processing in a variation. In the present embodiment, the priority is set in the search direction, the search is performed according to the priority, and the search processing is completed when the direction in which the details object 440 fits is found. That is, sometimes the search processing may be completed without searching the surroundings in all directions with the selected object as the center. It should be noted that the display position may be determined by searching in all directions, listing multiple candidates for the display position, and evaluating each of the multiple candidates.

For the flowchart of the search processing in the variation, a common step number is assigned to the processing common to the present embodiment, and the description of the common processing will be omitted.

Specifically, in the variation, the CPU 202 executes step S204-2, step S214-2, and step S226-2 instead of step S204, step S214, and step S226 shown in FIG. 10. If it is determined in step S202 that the search has been performed in all directions, the processing proceeds to step S230.

In step S204-2, the CPU 202 sets the right side of the right bus as a candidate for the display area of the details object 440.

In step S214-2, the CPU 202 sets the empty area 1410 in which the details object 440 fits, as a candidate for the display area of the details object 440.

In step S226-2, the CPU 202 sets the lower side of the selected object 450 as a candidate for the display area.

After step S204-2, step S214-2, and step S226-2, the CPU 202 proceeds to step S202, and repeats the processings of steps S206 to step S204-2, step S214-2, and step S226 until the search in all directions is completed.

If it is determined that the search in all directions is completed (YES in step S202), the CPU 202 determines an optimum display area from the candidates for the display area in step S230. As the evaluation method of the display area set as the candidate, the determination is made based on, for example, a first factor indicating the degree of overlap with another object 420, and a second factor indicating the distance from the selected object 450. The configuration may also be such that the user can set which of the first factor and the second factor is weighted for evaluation.

### (h3. Information processing device)

In the present embodiment, as an example of the information processing device that displays the program, the support device 200 that supports the development of the program is mentioned. Further, the information processing device capable of displaying the program is not limited to the support device 200, and may be, for example, an HMI that monitors various devices controlled by the PLC 100, a PC that is online connected to the PLC 100, or the like. The device executing the program to be displayed and the device having a function related to the display may be configured separately.

### <I. Action / Effect>

In the present embodiment, for the set object 423 displayed in simplified the format, the support device 200 may additionally present on the display 214 information not presented in the simplified format by displaying the details object 440 in the contents of the process shown by the set object 423. At this time, the detailed object 440 is additionally displayed without changing the state of the objects 420 presented in the circuit mode. Therefore, without losing the information before the detailed object 440 being additionally displayed, the information related to the instructions indicated by the selected object 420 can be additionally presented. That is, the support device 200 capable of effectively confirming the details of the control program and the flow of the control program is provided. As a result, an objective of the present invention is capable of providing an environment which provides effective support for control program development.

Further, as shown in FIG. 8a, the position of the details object 440 is determined according to the degree of density of the objects 420. Therefore, the details object 440 may be displayed by avoiding the area where the objects 420 are densely packed. That is, the details object 440 may be displayed at an appropriate position corresponding to the arrangement status of the objects 420 included in the program displayed in the circuit mode.

Further, the CPU 202 repeats steps S202 to step S212 of FIG. 10 until the empty area 1410 in which the details object 440 fits is found. That is, the details object 440 is disposed such that the area where the details object 440 and the objects 420 overlap is relatively small, so as for the CPU 220 to determine the display position. Therefore, when the details object 440 is displayed, it is possible to prevent the objects 420 indicating the instruction elements from being hidden by the newly additionally displayed details object 440. As a result, more information can be provided without losing information before and after additionally displaying the details object 440.

As shown in FIG. 8b, the support device 200 may determine the display position of the details object 440 based on a distance from the center O, centered on the display position of the selected object 450. That is, the support device 200 determines the display position of the details object 440 based on the distance from the display position of the selected object 450. Therefore, the details object 440 can be displayed at a position corresponding to the display position of the selected object 450 indicating instructions common to the details object 440. As a result, objects indicating instructions common to each other can be displayed in association with each other.

Further, in step S230 of FIG. 19, the CPU 202 determines the position of the details object 440 based on the degree of overlap between the details object 440 and the other objects 420 and the distance from the selected object 450. Therefore, it is possible to prevent the other objects 420 from being hidden by the details object 440 while displaying the objects indicating the instructions common to each other in association with each other. As a result, the detailed object 440 and the entire flow of the program can be effectively displayed.

Further, as shown in FIG. 12 and FIG. 14, the CPU 202 models the shape of the object 420 into a predetermined shape and obtains the position and size of the object 420. In this way, the position and size may be easily calculated by modeling the shape into a predetermined shape and obtaining the position and size of the object 420. As a result, the processing load on the CPU 202 can be reduced.

Further, as shown in step S208 of FIG. 10 and FIG. 19, the CPU 202 searches centering on the selected object 450 for a position to display the details object 440. Therefore, it is possible to quickly search for an appropriate position related to the selected object 450. As a result, the burden of processing for determining the display position can be reduced.

As shown in FIG. 10, the CPU 202 displays the detailed object 440 outside the circuit diagram indicating the user program if the details object 440 cannot fit in the area between the objects 420 and the selected object 450 when the surroundings of the selected object 450 is surrounded by the objects 420. Therefore, the details object 440 may be displayed without hiding the objects 420, and since there is a rule in the method of determining the display position of the details object 440, the user can easily predict where the details object 440 will be displayed, and can easily find the displayed details object 440.

### § 4 Appendix

As described above, the above-described embodiments and variations include the following technical ideas.

### [Configuration 1]

An information processing device (200), displaying a control program executed by a control device controlling a controlled object, and including:
a program display means (258), displaying the control program in a circuit mode in which objects (420) indicating instruction elements making up the control program are connected to each other; and
an additional display means (258), additionally displaying, in response to a selection of a specific object (450) among the objects displayed in the circuit mode, an additional object (440) presenting information related to execution of instructions indicated by the specific object and not presented in the state displayed in the circuit mode, while retaining the state of the objects displayed in the circuit mode.

### [Configuration 2]

The information processing device according to configuration 1, where the additional display means determines a position of the additional object based on the degree of density of the objects displayed in the circuit mode.

### [Configuration 3]

The information processing device according to configuration 1 or configuration 2, where an overlapping area between the additional object and the objects displayed in the circuit mode is relatively small, so as for the additional display means to determine the position of the additional object (steps S202 to S212).

### [Configuration 4]

The information processing device according to configuration 1, where the additional display means determines the position of the additional object based on a distance (R) from the selected specific object.

### [Configuration 5]

The information processing device according to configuration 1, where the additional display means determines the position of the additional object based on the degree of overlap between the additional object and the objects displayed in the circuit mode and the distance from the selected specific object (step S230).

### [Configuration 6]

The information processing device according to any one of configuration 1 to configuration 5, where the additional display means obtains a display area (S) and a display position (X, Y) of an object displayed in the circuit mode by modeling the object displayed in the circuit mode into a predetermined shape.

### [Configuration 7]

The information processing device according to any one of configuration 1 to configuration 6, where the additional display means searches for a position to display the additional object (step S208), centering on the selected specific object.

### [Configuration 8]

The information processing device according to configurations 7, where, when the additional object does not fit in the area between the objects (420-1, 420-2, 420-A) disposed adjacent to the specific object selected among the objects displayed in the circuit mode and the selected specific object, the additional display means displays the additional object outside the program displayed in the circuit mode (step S204).

### [Configuration 9]

A display program (258), displaying a control program executed in a control device controlling a controlled object, the display program causing the computer (200) to execute:
a step (S110) of making the control program receive the selection of a specific object among the objects included in the circuit mode in which the objects indicating the instruction elements making up the control program are connected to each other; and
a step (S118), when the selection of the specific object is received, of additionally displaying an additional object presenting information related to execution of instructions indicated by the specific object and not presented in the state displayed in the circuit mode, while retaining the state of the objects displayed in the circuit mode.

It should be considered that the embodiments disclosed this time are exemplary in all respects and not restrictive. The scope of the present invention is shown by the scope of claims, not the above description, and is intended to include all variations within the meaning and scope of the claims. Further, the inventions described in the embodiments and the respective variations are intended to be carried out alone or in combination, whenever possible.

### [Descriptions of Reference Numerals]

1 Control system; 8 Optical recording medium; 10 CPU unit; 14 I/O unit; 11 System bus; 12 Power supply unit; 200 Support device; 201 Storage unit; 202 CPU; 203 Operation unit; 206 RAM; 210 Keyboard; 212 Mouse; 214 Display; 216 Optical recording medium reader; 218 Communication interface; 250 Programming application; 252 Editor; 254 Compiler; 256 Debugger; 258 module; 260 Simulator; 270 Data storage unit; 272 Variable setting; 274 User program; 274a Overall; 274b Part; 276 Setting information; 278 Object information; 400 Circuit diagram; 420 Object; 421, 423, 425 Set object; 422 Real object; 424 Contact; 426 Coil; 428 Name; 430 Line; 440, 440a, 440b Details object; 442 Scroll bar; 450 Selected object; 451 Left bus; 452 Right bus; 1000 User interface screen; 1400 Program display area; 1410 Empty area; D Search direction; O Center.

## Claims

1. A display program, displaying a control program executed in a control device controlling a controlled object, and comprising:
a program display means, displaying the control program in a circuit mode in which objects indicating instruction elements making up the control program are connected to each other; and
an additional display means, additionally displaying, in response to a selection of a specific object among the objects displayed in the circuit mode, an additional object presenting information that is related to an execution of instructions indicated by the specific object and that was not presented in the state displayed in the circuit mode, while retaining the state of the objects displayed in the circuit mode.

2. The information processing device according to claim 1, wherein the additional display means determines a position of the additional object based on the degree of density of the objects displayed in the circuit mode.

3. The information processing device according to claim 1 or claim 2, wherein an overlapping area between the additional object and the objects displayed in the circuit mode is relatively small, so as for the additional display means to determine the position of the additional object.

4. The information processing device according to claim 1, wherein the additional display means determines the position of the additional object based on a distance from the selected specific object.

5. The information processing device according to claim 1, wherein the additional display means determines the position of the additional object based on the degree of overlap between the additional object and the objects displayed in the circuit mode and a distance from the selected specific object.

6. The information processing device according to any one of claim 1 to claim 5, wherein the additional display means obtains a display area and a display position of an object displayed in the circuit mode by modeling the object displayed in the circuit mode into a predetermined shape.

7. The information processing device according to any one of claim 1 to claim 6, wherein the additional display means searches for the position to display the additional object, centering on the selected specific object.

8. The information processing device according to claim 7, wherein, when the additional object does not fit in an area between the objects disposed adjacent to the specific object selected among the objects displayed in the circuit mode and the selected specific object, the additional display means displays the additional object outside the program displayed in the circuit mode.

9. A display program, displaying a control program executed in a control device controlling a controlled object, the display program causing a computer to execute:
a step of making the control program receive the selection of a specific object among objects comprised in a circuit mode in which the objects indicating the instruction elements making up the control program are connected to each other; and
a step, when the selection of the specific object is received, of additionally displaying an additional object presenting information that is related to execution of instructions indicated by the specific object and that was not presented in the state displayed in the circuit mode, while retaining a state of the objects displayed in the circuit mode.
